# EUROPÄISCHE PATENTSCHRIFT

(11) **EP 3 673 249 B1**
(45) Veröffentlichungstag und Bekanntmachung des Hinweises auf die Patenterteilung: **11.05.2022**
(21) Anmeldenummer: 18822277.2
(22) Anmeldetag: 03.12.2018
(51) Int. Cl.: G01J 3/10, H01K 1/14, H01K 1/04, H01K 1/20, H01K 3/02

(54) **STRAHLUNGSQUELLE ZUR ERZEUGUNG EINER ELEKTROMAGNETISCHEN STRAHLUNG SOWIE VERFAHREN ZU IHRER HERSTELLUNG**
RADIATION SOURCE FOR GENERATING ELECTROMAGNETIC RADIATION, AND METHOD FOR PRODUCING SAME
SOURCE DE RAYONNEMENT POUR LA GÉNÉRATION D'UN RAYONNEMENT ÉLECTROMAGNÉTIQUE AINSI QUE PROCÉDÉ POUR SA FABRICATION

(30) Priorität: 04.12.2017 DE 102017128664
(43) Veröffentlichungstag der Anmeldung: 01.07.2020
(73) Patentinhaber: CiS Forschungsinstitut für Mikrosensorik GmbH, 99099 Erfurt (DE)
(72) Erfinder: KÄPPLINGER, Indira, 07745 Jena (DE); KLEIN, Thomas, 99192 Kornhochheim (DE); TÄSCHNER, Robert, 08523 Plauen (DE); HILLER, Erik, 99096 Erfurt (DE); SCHÄDEL, Jörg Martin, 99310 Arnstadt (DE)
(74) Vertreter: Engel, Christoph Klaus
(86) Internationale Anmeldenummer: PCT/EP2018/083263
(87) Internationale Veröffentlichungsnummer: WO 2019/110463

(56) Entgegenhaltungen:
- DE-A1-102016 206 381
- US-A1- 2007 034 978
- US-A1- 2014 291 704
- US-A1- 2017 012 199
- US-B2- 7 825 380
- US-B2- 8 492 737
- MÜLLER L ET AL: "Infrared emitting nanostructures for highly efficient microhotplates", JOURNAL OF MICROMECHANICS & MICROENGINEERING, INSTITUTE OF PHYSICS PUBLISHING, BRISTOL, GB, Bd. 24, Nr. 3, 28. Februar 2014 (2014-02-28), Seite 35014, XP020258239, ISSN: 0960-1317, DOI: 10.1088/0960-1317/24/3/035014 [gefunden am 2014-02-28]
- DALY J T ET AL: "NANO-STRUCTURED SURFACES FOR TUNED INFRARED EMISSION FOR SPECTROSCOPIC APPLICATIONS", VISUAL COMMUNICATIONS AND IMAGE PROCESSING; 20-1-2004 - 20-1-2004; SAN JOSE,, Bd. 3937, 1. Januar 2000 (2000-01-01), Seiten 80-89, XP001197244, DOI: 10.1117/12.382797 ISBN: 978-1-62841-730-2

## Beschreibung

Die vorliegende Erfindung betrifft eine Strahlungsquelle zur Erzeugung einer elektromagnetischen Strahlung. Die Strahlungsquelle besitzt ein Trägersubstrat, eine vom Trägersubstrat getragene Membranschicht und eine auf der Membranschicht aufgebrachte Emitterschicht, die über elektrische Kontaktbereiche an eine Stromversorgungsquelle angeschlossen werden kann, um erhitzt zu werden und dadurch die elektromagnetische Strahlung, bevorzugt im Infrarotbereich zu emittieren. Das Trägersubstrat ist in einem Membranbereich auf der der Emitterschicht abgewandten Seite der Membranschicht entfernt, was insbesondere für die thermische Isolation der Emitterschicht erforderlich ist.

Derartige Strahler sind grundsätzlich bekannt. Sie dienen insbesondere der Erzeugung einer Strahlung im IR-Bereich, welche beispielsweise in Sensoren zur Untersuchung der Zusammensetzung von Gasgemischen verwendet wird.

Die US 6 163 557 A zeigt eine Struktur, welche ein Substrat und einen Gruppe III-V Nitrid Epitaxialfilm umfasst. Weiterhin umfasst das Substrat eine Saphirmembran und/oder mindestens ein Mesa, welches eine ebene Oberfläche und steile Flanken aufweist.

Aus der US 6 031 970 A ist eine Infrarotstrahlungsquelle bekannt. Die IR-Strahlungsquelle umfasst einen elektrisch leitfähigen Film, der durch eine Gas- oder Dampfphasenabscheidung gebildet ist und mindestens ein Netzwerk umfasst. Das mindestens eine Netzwerk besteht aus diamantartigem Kohlenstoff. Der elektrisch leitfähige Film ist als Emitterschicht ausgebildet. Eine Substratschicht der IR-Strahlungsquelle weist eine mikrostrukturierte Oberfläche auf.

Die US 2014/0291704 A1 beschreibt eine Infrarotvorrichtung, welche eine dielektrische Membran umfasst. Auf oder in der Membran ist mindestens eine gemusterte bzw. strukturierte Schicht gebildet, welche lateral beabstandete Strukturen umfasst.

Die US 2017/0012199 A1 zeigt eine optische Strahlungsquelle, die ein Halbleitersubrat, eine in das Halbleitersubstrat geätzte ungeordnete Halbleiterstruktur und ein Heizelement umfasst. Das Halbleitermaterial kann "black silicon" entsprechen.

In der EP 1 779 418 B1 ist eine Vorrichtung zum Emittieren und/oder Absorbieren elektromagnetischer Energie beschrieben. Die Vorrichtung umfasst eine Halbleitermaterialschicht und eine metallische oder metallisch-ähnliche Materialschicht, die regelmäßig verteilte Oberflächenmerkmale aufweist.

Aus der DE 10 2010 045 644 A1 ist ein Sensor zur Bestimmung einer in einem Abgas eines Verbrennungsmotors enthaltenen Kohlendioxyd- und/oder Wasserkonzentration bekannt. Der Sensor besitzt eine Strahlungsquelle zur Erzeugung einer charakteristischen elektromagnetischen Strahlung, die von der Strahlungsquelle durch das Abgas auf einen Strahlungsempfänger zur Auswertung der Intensität gestrahlt wird. Die von dem Strahlungsempfänger gemessene Intensität der Strahlung stellt ein Maß für die Kohlendioxyd- und/oder Wasserkonzentration im Abgas dar. Die Strahlungsquelle besitzt ein Substrat, ein darauf ausgebildetes elektrisch betriebenes Heizelement und eine das Heizelement bedeckende Passivierung. Gemäß einer besonderen Ausführungsform ist auf der Passivierung ein sogenanntes Siliziumgras (Black Silicon) ausgebildet, welches der Strahlungsquelle die Eigenschaften eines nahezu idealen Schwarzkörperstrahlers verleihen soll. Als ein wesentliches Merkmal des Siliziumgrases wird eine erhöhte Absorption von einfallendem Licht angegeben. Als Lichtemitter verhält sich das Siliziumgras demnach ähnlich wie ein idealer Schwarzkörperstrahler. Die abgestrahlte thermische Strahlung soll in ihrer spektralen Verteilung beim Siliziumgras weitgehend dem Planckschen Strahlungsgesetz folgen.

Vergleichbare Sensoren werden von verschiedenen Herstellern als Mikro-Elektro-Mechanische-Systeme (MEMS) gefertigt, welche ebenfalls Heizstrukturen (sogenannte Hotplates) als Strahlungsquellen nutzen. Untersuchungen haben gezeigt, dass MEMS Heizstrukturen im abgestrahlten Spektrum relevante Abweichungen zum idealen Schwarzkörper-Spektrum zeigen. Eine Ursache dafür sind Mehrfachreflexionen der emittierten Strahlung, die innerhalb der Träger- und Deckschichten auftreten. Diese Reflexionen führen u.a. zu Interferenzerscheinungen, die für bestimmte Wellenlängenbereiche stärkere Emissionseinbußen zur Folge haben als in anderen Bereichen. Außerdem ergeben sich auch unter verschiedenen Abstrahlwinkeln aufgrund der Wegunterschiede unterschiedliche Emissionsspektren. Gerade bei dickeren Schichten (Membran- oder Passivierungsschicht) kommt es zu größeren Abweichungen im Emissionsspektrum. Die Verwendung besonders dünner Schichten könnte diese Fehlerquelle zwar minimieren, jedoch ergeben sich dann besondere Schwierigkeiten in der Fertigung, aufgrund der mechanischen Instabilität der Schichten.

Die DE 10 2016 206 381 A1 offenbart eine Strahlungsquelle, welche der Erzeugung einer elektromagnetischen Strahlung dient. Die Strahlungsquelle gemäß umfasst ein Trägersubstrat, eine Membranschicht und eine Emitterschicht. Die Membranschicht ist auf der Oberseite des Trägersubstrats aufgebracht und die Emitterschicht ist auf der Membranschicht aufgebracht. Elektrische Kontaktbereiche zur elektrischen Kontaktierung der Emitterschicht sind an die Emitterschicht angebracht.

Die Erfindung betrifft darüber hinaus ein Verfahren zur Herstellung einer Strahlungsquelle. Dazu wird zunächst das Trägersubstrat bereitgestellt, auf dessen Oberseite in einem späteren Schritt die Membranschicht aufgebracht wird. Auf der Membranschicht wird dann die Emitterschicht aufgebracht. Schließlich wird das Trägersubstrat auf der der Membranschicht abgewandten Unterseite in einem Membranbereich entfernt, um die Membranschicht an der von der Emitterschicht abgewandten Seite freizulegen. Weiterhin müssen elektrische Kontaktbereiche zur elektrischen Kontaktierung der Emitterschicht angebracht werden.

Beispielsweise beschreibt die DE 10 2013 017 018 A1 ein Verfahren zum Herstellen einer Struktur sowie eine nach diesem Verfahren hergestellte Mikro-Nano-Struktur. Die Struktur besitzt einen ersten Strukturteil, vorzugsweise bestehend aus Silicium-Mikro-Strukturen, das zumindest teilweise derart mit einem weiteren Strukturteil, vorzugsweise bestehend aus Silicium, Aluminium oder Kalzium aufweisenden Beschichtungsmaterialien versehen ist. Damit soll eine Oberfläche erhalten werden, die neben einer hohen Emissivität, insbesondere im infraroten Strahlungsbereich, eine hohe Stabilität gegen mechanische und/oder thermische und/oder durch Kontaktmedien hervorgerufene Beanspruchung aufweist.

Das Aufbringen mehrerer Schichten über dem eigentlichen Heizwiderstand erfordert hohen technischen Aufwand. Außerdem erhöht sich bei der Verwendung mehrerer an der Emission beteiligte Schichten die thermische Trägheit des Strahlers, was dem Einsatz für schnelle Anwendungen entgegensteht.

Eine Aufgabe der vorliegenden Erfindung besteht ausgehend vom Stand der Technik darin, eine als schwarzen Strahler nutzbare Strahlungsquelle mit verbessertem Emissionsspektrum bereitzustellen, die gleichzeitig einen geringen Fertigungsaufwand erfordert. Die Erfindung soll außerdem ein Verfahren zur Herstellung einer solchen Strahlungsquelle liefern.

Die Aufgabe wird durch eine Strahlungsquelle gemäß Anspruch 1 und ein Verfahren gemäß Anspruch 8 gelöst.

Die Strahlungsquelle umfasst eine Membranschicht im Membranbereich mit einer Oberflächenstrukturierung (auch als Textur zu verstehen) wobei die auf der derart strukturierten Membranschicht aufgebrachte Emitterschicht dieser Strukturierung folgt. Die durchschnittliche Amplitude der Strukturierung, d. h. die Höhendifferenz zwischen einem Wellental und einem Wellenberg der Struktur, ist dabei gleich oder größer als die Dicke der Emitterschicht gewählt. Die durch die Oberflächenstrukturierung ausgebildeten Flanken weisen variierende Winkel zur Haupterstreckungsebene Oberfläche auf, d. h. es besteht eine unregelmäßige Oberflächenstrukturierung.

Ein wesentlicher Vorteil einer so gestalteten Strahlungsquelle besteht darin, dass das abgegebene Emissionsspektrum sehr gleichförmig ist und Interferenzerscheinungen weitgehend vermieden werden. Da die Strukturierung bereits in einem frühen Prozessschritt in die Membranschicht eingebracht wird, d. h. vor dem Auftrag der Emitterschicht, können weitere Beschichtungsschritte zur Erzeugung einer zusätzlichen Struktur auf der Emitterschicht entfallen. Vorteilhaft ist außerdem, dass keine Prozessschritte erforderlich werden, die typische Halbleiterbearbeitungsanlagen kontaminieren würden. Es werden somit die Vorteile emissionsverbessernder Texturen nutzbar gemacht, ohne dass zusätzlich zur originären Emitterschicht (Heizschicht) weitere Emissionsschichten erzeugt werden müssen. Ein weiterer Vorteil ist darin zu sehen, dass durch die Oberflächenstrukturierung der Membran im Membranbereich eine verringerte mechanische Spannung entsteht.

Gemäß einer bevorzugten Ausführungsform folgt die Oberflächenstrukturierung der Membranschicht einer vor dem Aufbringen der Membranschicht auf der Oberfläche des Trägersubstrats ausgebildeten Strukturierung unmittelbar. Die auf der Membranschicht erzeugte Struktur wird von der Emitterschicht unmittelbar übernommen. Die Ausbildung der Oberflächenstrukturierung auf der Membranschicht erfolgt somit innerhalb herkömmlicher Halbleiterprozessschritte.

Vorzugsweise besitzt die Emitterschicht im Membranbereich, der die Oberflächenstrukturierung aufweist, eine im Wesentlichen gleichbleibende Schichtdicke. Die Struktur der Membranschicht wird also im Wesentlichen identisch, d. h. mit gleicher Amplitude, auf die Emitterschicht übertragen.

Eine vorteilhafte Ausführungsform der Strahlungsquelle zeichnet sich dadurch aus, dass auf der der Membranschicht abgewandten Seite der Emitterschicht eine Passivierungsschicht aufgebracht ist, wobei die Passivierungsschicht an den elektrischen Kontaktbereichen der Emitterschicht durchbrochen ist, um die elektrische Kontaktierung zu ermöglichen. Die Passivierungsschicht ist für das gewünschte Spektrum der Emission transparent. Bei abgewandelten Ausführungsformen kann die Passivierungsschicht aus mehreren Teilschichten bestehen.

Die Emitterschicht weist Löcher auf, die eine Perforierung der Emitterschicht bilden. Die Membranschicht ist im Bereich der Löcher an der von der Emitterschicht zugewandten Seite freigelegt, d. h. im Bereich der in der Emitterschicht ausgebildeten Löcher ist keine Emitterschicht mehr vorhanden, sodass Durchgangslöcher vorhanden sind. Alternativ können die Löcher lediglich als Vertiefungen bzw. Sacklöcher ausgebildet sein.

Besonders bevorzugt sind die Löcher in der Emitterschicht nur im dem Bereich der Membranschicht ausgebildet, der die Oberflächenstrukturierung aufweist. Diese Ausführungsform hat den Vorteil, dass der Wärmeeintrag in Bereiche außerhalb der Oberflächenstrukturierung gesenkt wird und somit der Wirkungsgrad erhöht wird. Es wird eine höhere Abstrahlleistung bei gleichbleibender Heizleistung erzielt.

Die Abmessung der Löcher wird vorzugsweise in Abhängigkeit von der Wellenlänge, für welche die Emitterschicht ausgebildet ist, gewählt. Bevorzugt weist jedes Loch eine Erstreckung auf, die dem 0,1- bis 3-fachen der Zielwellenlänge entspricht. Besonders bevorzugt weist jedes Loch eine Erstreckung vom 0,25-fachen bis 1-fachen der Zielwellenlänge auf. Bei einer gewünschten Infrarotstrahlung (IR) kann jedes Loch beispielsweise eine Erstreckung von 0,5 µm bis 50 µm aufweisen.

Vorzugsweise ist die auf der Emitterschicht aufgebrachte Passivierungsschicht in dem Bereich der Löcher auf der Membranschicht ausgebildet und im Weiteren auf der Emitterschicht ausgebildet. Bevorzugt ist die Passivierungsschicht durchgängig ausgebildet, wobei sie der Strukturierung der Membranschicht sowie der Emitterschicht folgt.

Ein Vorteil einer perforierten bzw. mit Löchern versehenen Emitterschicht ist, dass der elektrische Widerstand erhöht und über die gewählte Anzahl der Löcher einstellbar ist. Die Einstellung erfolgt unabhängig vom Flächenwiderstand und der Schichtdicke der Emitterschicht. Somit sind besonders dünne und damit schlecht beherrschbare Schichtdicken vermeidbar. Ein weiterer Vorteil ist, dass das Emissionsspektrum modifizierbar ist. Ebenso besteht ein weiterer Vorteil der perforierten bzw. mit Löchern versehenen Emitterschicht darin, dass die Emissivität bzw. der Emissionsgrad gegenüber Strahlern nach dem Stand der Technik verbessert ist.

Das Verfahren Z umfasst einen Schritt wobei das Trägersubstrat vor dem Aufbringen der Membranschicht an seiner Oberseite strukturiert wird, um eine Oberflächenstrukturierung bzw. Textur zu erzeugen, deren durchschnittliche Amplitude gleich oder größer ist als die Dicke der in den nachfolgenden Schritten aufzubringenden Emitterschicht. Besonders vorteilhaft ist es, wenn die Emitterschicht mit im Wesentlichen gleich bleibender Dicke auf die Membranschicht aufgebracht wird, sodass die Emitterschicht auch an ihrer der Membranschicht abgewandten Seite eine Oberflächenstrukturierung aufweist, deren durchschnittliche Amplitude gleich oder größer ist als die Dicke der Emitterschicht.

In einem Verfahrensschritt werden in die Emitterschicht zahlreiche Löcher in der Art einer Perforierung eingebracht, sodass die Emitterschicht eine Perforierung aufweist. Vorzugweise werden die Löcher in einem halbleitertechnologischem Abscheideverfahren erzeugt, wobei beispielsweise eine fotolithografische Strukturierung erfolgt. Der Herstellungsprozess der Löcher in der Emitterschicht sieht vor, dass ein Lack, insbesondere ein Fotolack oder ein Lift-Lack, entsprechend der zu definierenden Positionen aufgebracht, belichtet und entwickelt wird. Je nach Prozess erfolgt weiterhin ein Plasmaätzen der Emitterschicht und eine Lackentfernung oder ein Sputtern bzw. ein Kathodenzerstäubungsschritt und ein Lift-Up-Verfahren.

Gemäß einer bevorzugten Ausführung wird in einem weiteren Verfahrensschritt auf der Emitterschicht eine Passivierungsschicht aufgebracht, welche für die von der Emitterschicht bei Erhitzung emittierte elektromagnetische Strahlung durchlässig ist. Dabei ist es zweckmäßig, wenn in die Passivierungsschicht Durchgangsöffnungen eingebracht werden und diese mit elektrisch leitfähigem Material gefüllt werden, um die Kontaktbereiche zur elektrischen Kontaktierung der Emitterschicht zu bilden. Besonders bevorzugt erfolgt das Aufbringen der Passivierungsschicht nach dem Ausbilden der Löcher in der Emitterschicht.

Eine besonders bevorzugte Ausführung des Verfahrens nutzt halbleitertechnologische Abscheideverfahren, um die Membranschicht, die Emitterschicht und ggf. die Passivierungsschicht auszubilden.

Weitere Vorteile und Einzelheiten ergeben sich aus der nachfolgenden Beschreibung bevorzugter Ausführungsformen der vorliegenden Erfindung, unter Bezugnahme auf die Zeichnung. Es zeigen:
- Fig. 1: einen schematischen Prozessablauf von fünf Schritten zur Herstellung einer ersten Strahlungsquelle;
- Fig. 2: einen schematischen Prozessablauf von sechs Schritten zur Herstellung einer Ausführungsform der Strahlungsquelle.

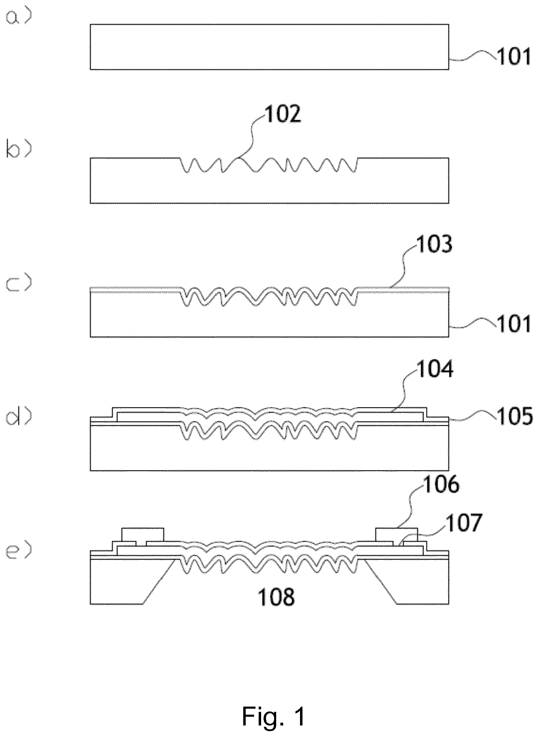

Fig. 1 zeigt einen schematischen Prozessablauf von fünf Schritten zur Herstellung einer Strahlungsquelle.

Die in der Fig. 1 dargestellten Schritte a) bis e) stellen die Hauptschritte dar. Im ersten Schritt a) wird ein Trägersubstrat 101 bereitgestellt, welches bevorzugt aber nicht ausschließlich durch ein Siliziumwafer gebildet ist. Abweichend von der im Stand der Technik üblichen Vorgehensweise wird nachfolgend im Schritt b) nicht sofort eine weitere Schicht auf dem Trägersubstrat abgeschieden sondern stattdessen die Oberseite des Trägersubstrats 101 mit einer Oberflächenstrukturierung 102 versehen. Insbesondere wird der Bereich des Trägersubstrats 101, auf dem später eine Emitterschicht aufgebracht werden soll, strukturiert. Die Oberflächenstrukturierung 102 kann beispielsweise mittels DRIE Prozess (black / brown silicon), Graustufenlithographie und anschließendem Ätzen, oder selbstorganisierenden Strukturen (KOH-IPA oder HF-HNO3) erzeugt werden. Die Oberflächenstrukturierung 102 soll mit möglichst stark variierenden Winkeln zur Oberfläche erzeugt werden und eine durchschnittliche Amplitude aufweisen, die gleich oder größer ist als die Dicke einer nachfolgend aufzubringenden Emitterschicht. Anders als im Stand der Technik wird keine regelmäßige Struktur an der Oberfläche erzeugt sondern eine möglichst unregelmäßige Struktur. Im nächsten Schritt c) wird auf das Trägersubstrat 101, insbesondere auf den mit der Oberflächenstrukturierung 102 versehenen Bereich eine Membranschicht 103 aufgebracht. Die Membranschicht 103 folgt der Struktur, sodass sie ebenfalls eine strukturierte Oberfläche aufweist und bevorzugt eine nahezu gleichbleibende Dicke besitzt. Die Membranschicht kann z. B. aus SiₓN_{y} oder SiO₂/SiₓN_{y} gebildet sein oder aus mehreren Teilschichten stapelförmig aufgebaut sein.

Daraufhin wird im Schritt d) eine Emitterschicht 104 auf die Membranschicht 103 aufgebracht, bevorzugt mit in der Halbleitertechnik üblichen Abscheideverfahren. Auch die Emitterschicht 104, welche unter Betriebsbedingungen die gewünschte Strahlung emittieren soll, folgt der ursprünglich angebrachten Struktur 102, die in der Oberfläche der Membranschicht 103 abgebildet ist, sodass die Emitterschicht 104 selbst eine strukturierte Oberfläche aufweist.

Je nach Anwendungsfall kann in einem nachfolgenden Schritt (ebenfalls in Abbildung d) dargestellt) eine Passivierungsschicht 105 auf der Emitterschicht 104 abgeschieden werden. Die Passivierungsschicht 105 ist transparent für die zu emittierende Strahlung und dient vor allem dem Schutz der Emitterschicht 104 vor Umwelteinflüssen. In abgewandelten Ausführungen können auch mehrere Passivierungsschichten aufgebracht werden. Wird als Emitterschicht eine thermisch stabile und direkt kontaktierbare Schicht, wie beispielsweise Platin eingesetzt, kann auf die Passivierung und eine separate Kontaktmetallisierung verzichtet werden.

Schließlich erfolgt im Schritt e) die elektrische Kontaktierung der Emitterschicht. Dazu wird oberhalb der Passivierungsschicht 105 eine Kontaktmetallisierung 106 angebracht, die über Kontaktöffnungen 107 in der Passivierungsschicht mit der Emitterschicht 104 elektrisch verbunden ist. Über die voneinander entfernt liegenden Kontakte 106 wird im Betrieb der Strahlungsquelle ein elektrischer Strom in die Emitterschicht 104 eingespeist, der aufgrund des elektrischen Widerstands zur Erhitzung der Emitterschicht und damit zur Emission elektromagnetischer Strahlung führt.

Erst am Prozessende wird von der Unterseite des Trägersubstrats 101 eine Ausnehmung 108 eingebracht, um im Bereich der Strukturierung das Trägersubstrat vollständig zu entfernen. Damit wird die Membranschicht 103 auf ihrer der Emitterschicht abgewandten Seite freigelegt, um eine Membran zu definieren. Die damit einseitig offene Membran dient der Wärmeisolation und gleichzeitig der Ermöglichung einer Längenausdehnung der Membran bei der für die Strahlungserzeugung erforderlichen Erwärmung. Die Ausnehmung 108 kann beispielsweise mittels nasschemischen anisotropem Ätzens oder mittels eines DRIE Trockenätzprozesses realisiert werden.

Die auf diese Weise fertiggestellte Strahlungsquelle kann nach einem ggf. nötigen Vereinzeln in ein Gehäuse eingebaut oder in einen komplexen Sensor integriert werden.

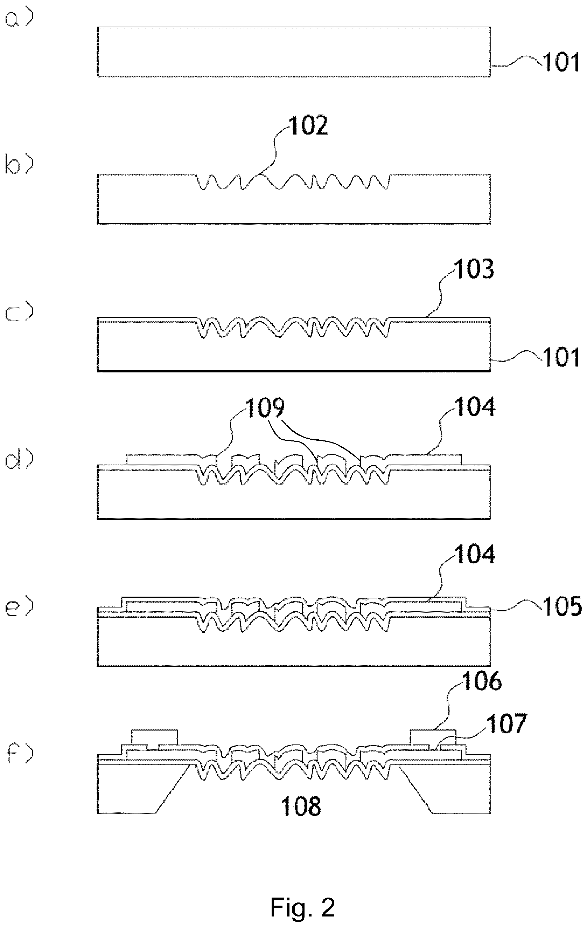

Fig. 2 zeigt einen schematischen Prozessablauf von sechs Schritten zur Herstellung der Strahlungsquelle gemäß einer zweiten Ausführungsform.

Die in der Fig. 2 dargestellten Schritte a) bis f) stellen die Hauptschritte bei der Ausführung des erfindungsgemäßen Verfahrens zur Herstellung der erfindungsgemäßen Strahlungsquelle dar. Die in Fig. 2 gezeigten Schritte a) bis c) gleichen den in Fig. 1 gezeigten Schritten a), b) und c).

Der in Fig. 2 gezeigte Schritt d) gleicht zunächst dem in Fig. 1 gezeigten Schritt d), wobei die Emitterschicht 104 auf die Membranschicht 103 aufgebracht wird. Abweichend zu Fig. 1 wird nun aber in die Emitterschicht 104 eine aus zahlreichen Löchern 109 bestehende Perforierung eingebracht, die vorzugsweise als Durchgangslöcher 109 in die Emitterschicht 104 eingearbeitet sind. Die Membranschicht 103 ist somit im Bereich der Durchgangslöcher 109 freigelegt, d. h. im Bereich der ausgebildeten Durchgangslöcher 109 ist nach Abschluss des Schritts d) keine Emitterschicht vorhanden. Die Perforierung erfolgt mit in der Halbleitertechnik bekannten fotolithografischen Verfahren zur Erzeugung von Strukturen. Wie in Fig. 2 gezeigt, ist die Perforierung mit den Durchgangslöchern 109, insbesondere im Bereich der rückseitigen Ausnehmung 108 ausgebildet.

Der in Fig. 2 gezeigte Schritt e) gleicht teilweise dem in Fig. 1 gezeigten Schritt d), wobei je nach Anwendungsfall eine Passivierungsschicht 105 auf der Emitterschicht 104 abgeschieden wird. Die Passivierungsschicht 105 überdeckt bzw. verschließt die Durchgangslöcher 109.

Der Schritt f) der Fig. 2 gleicht zunächst dem in Fig. 1 gezeigten Schritt e). Abweichend zu Fig. 1 zeigt die Darstellung von Schritt f) in Fig. 2 aber die in Schritt d) erzeugten Durchgangslöcher 109.

### Bezugszeichen

- 101: - Trägersubstrat
- 102: - Oberflächenstrukturierung
- 103: - Membranschicht
- 104: - Emitterschicht
- 105: - Passivierungsschicht
- 106: - Kontaktmetallisierung
- 107: - Kontaktöffnung
- 108: - Ausnehmung
- 109: - Löcher / Durchgangslöcher

## Patentansprüche

1. Strahlungsquelle zur Erzeugung einer elektromagnetischen Strahlung, umfassend ein Trägersubstrat (101), eine vom Trägersubstrat (101) getragene Membranschicht (103) und eine auf der Membranschicht (103) aufgebrachte Emitterschicht (104) mit elektrischen Kontaktbereichen (106), wobei das Trägersubstrat (101) in einem Membranbereich auf der der Emitterschicht (104) abgewandten Seite der Membranschicht entfernt ist, und wobei die Emitterschicht (104) beim Anlegen eines elektrischen Stroms erhitzt wird, um die elektromagnetische Strahlung zu emittieren, Z wobei,
- die Membranschicht (103) im Membranbereich eine Oberflächenstrukturierung (102) aufweist, wobei die in der Oberflächenstrukturierung ausgebildeten Flanken unterschiedliche Winkel zur Haupterstreckungsebene der Oberfläche aufweisen;
- die Emitterschicht (104) der Oberflächenstrukturierung (102) folgt;
- die Emitterschicht (104) zahlreiche Löcher (109) in der Art einer Perforierung aufweist;
- die durchschnittliche Amplitude der Oberflächenstrukturierung (102) gleich oder größer ist als die Dicke der Emitterschicht (104).

2. Strahlungsquelle nach Anspruch 1, **dadurch gekennzeichnet, dass** die Oberflächenstrukturierung der Membranschicht (103) einer vor dem Aufbringen der Membranschicht (103) auf der Oberfläche des Trägersubstrats (101) ausgebildeten Strukturierung (102) folgt.

3. Strahlungsquelle nach Anspruch 1 oder 2, **dadurch gekennzeichnet, dass** die Emitterschicht (104) im Membranbereich mit der Oberflächenstrukturierung (102) eine im Wesentlichen gleichbleibende Schichtdicke aufweist.

4. Strahlungsquelle nach einem der Ansprüche 1 bis 3, **dadurch gekennzeichnet, dass** auf der der Membranschicht (103) abgewandten Seite der Emitterschicht (104) eine Passivierungsschicht (105) aufgebracht ist, wobei die Passivierungsschicht (105) an den elektrischen Kontaktbereichen (106) der Emitterschicht (104) durchbrochen ist, um die elektrische Kontaktierung zu ermöglichen.

5. Strahlungsquelle nach einem der Ansprüche 1 bis 4, **dadurch gekennzeichnet, dass** die Löcher (109) die Emitterschicht (104) durchdringen und sich bis zur Membranschicht (103) erstrecken.

6. Strahlungsquelle nach einem der Ansprüche 1 bis 4, **dadurch gekennzeichnet, dass** die in der Emitterschicht (104) angebrachten Löcher (109) als Sacklöcher ausgebildet sind.

7. Strahlungsquelle nach einem der Ansprüche 1 bis 6, **dadurch gekennzeichnet, dass** die Passivierungsschicht (105) die Löcher (109) verschließt.

8. Verfahren zur Herstellung einer Strahlungsquelle, welche der Erzeugung einer elektromagnetischen Strahlung dient und ein Trägersubstrat (101), eine Membranschicht (103) sowie eine Emitterschicht (104) besitzt, folgende Schritte umfassend:
- Bereitstellung des Trägersubstrat (101);
- Aufbringen der Membranschicht (103) auf der Oberseite des Trägersubstrats (101);
- Aufbringen der Emitterschicht (104) auf der Membranschicht (103);
- Entfernen des Trägersubstrats (101) auf der der Membranschicht (103) abgewandten Unterseite in einem Membranbereich, um die Membranschicht (103) an der von der Emitterschicht (104) abgewandten Seite freizulegen;
- Anbringen von elektrischen Kontaktbereichen (106) zur elektrischen Kontaktierung der Emitterschicht (104); wobei das Trägersubstrat (101) vor dem Aufbringen der Membranschicht (103) an seiner Oberseite strukturiert wird, um eine Oberflächenstrukturierung (102) zu erzeugen, deren durchschnittliche Amplitude gleich oder größer ist als die Dicke der in den nachfolgenden Schritten aufzubringenden Emitterschicht (104), wobei die in der Oberflächenstrukturierung ausgebildeten Flanken unterschiedliche Winkel zur Haupterstreckungsebene der Oberfläche aufweisen, und wobei nach der Ausbildung der Emitterschicht (104) in diese Schicht zahlreiche Löcher (109) in der Art einer Perforierung eingebracht werden.

9. Verfahren nach Anspruch 8, **dadurch gekennzeichnet, dass** die Membranschicht (103) mit im Wesentlichen gleich bleibender Dicke auf die Oberflächenstruktur (102) des Trägersubstrats (101) aufgebracht wird, sodass die Membranschicht (103) auch an ihrer dem Trägersubstrat (101) abgewandten Seite eine Oberflächenstrukturierung aufweist, deren durchschnittliche Amplitude gleich oder größer ist als die Dicke der im nachfolgenden Schritt aufzubringenden Emitterschicht (104) .

10. Verfahren nach Anspruch 8 oder 9, **dadurch gekennzeichnet, dass** die Emitterschicht (104) mit im Wesentlichen gleich bleibender Dicke auf die Membranschicht (103) aufgebracht wird, sodass die Emitterschicht (104) auch an ihrer der Membranschicht abgewandten Seite eine Oberflächenstrukturierung aufweist, deren durchschnittliche Amplitude gleich oder größer ist als die Dicke der Emitterschicht (104).

11. Verfahren nach einem der Ansprüche 8 bis 10, **dadurch gekennzeichnet, dass** nach der Ausbildung der Emitterschicht (104) in diese die Löcher (109) als Sacklöcher eingebracht werden.

12. Verfahren nach einem der Ansprüche 8 bis 11, **dadurch gekennzeichnet, dass** auf der Emitterschicht (104) eine Passivierungsschicht (105) aufgebracht wird, welche für die von der Emitterschicht (104) bei Erhitzung emittierte elektromagnetische Strahlung durchlässig ist.

13. Verfahren nach einem der Ansprüche 8 bis 12,, **dadurch gekennzeichnet, dass** die in die Emitterschicht (104) eingebrachten Löcher (109) durch die Passivierungsschicht (105) verschlossen werden.

14. Verfahren nach einem der Ansprüche 8 bis 13, **dadurch gekennzeichnet, dass** in die Passivierungsschicht (105) Durchgangsöffnungen (107) eingebracht werden und diese mit elektrisch leitfähigem Material gefüllt werden, um die Kontaktbereiche (106) zur elektrischen Kontaktierung der Emitterschicht (104) zu bilden.

15. Verfahren nach einem der Ansprüche 8 bis 14, **dadurch gekennzeichnet, dass** die Membranschicht (103), die Emitterschicht (104) und ggf. die Passivierungsschicht (105) durch halbleitertechnologische Abscheideverfahren aufgebracht werden.

## Claims

1. A radiation source for generating electromagnetic radiation, comprising a carrier substrate (101), a membrane layer (103) supported by the carrier substrate (101) and an emitter layer (104) having electrical contact regions (106) which is applied to the membrane layer (103), wherein the carrier substrate (101) is removed from the membrane layer in a membrane region on the side of the membrane layer facing away from the emitter layer (104), and wherein the emitter layer (104) is heated when an electric current is applied, in order to emit the electromagnetic radiation, wherein
- the membrane layer (103) has a surface structuring (102) in the membrane region, the flanks formed in the surface structuring being at different angles to the main extension plane of the surface;
- the emitter layer (104) follows the surface structuring (102);
- the emitter layer (104) has numerous holes (109) in the manner of a perforation;
- the average amplitude of the surface structuring (102) is equal to or greater than the thickness of the emitter layer (104).

2. The radiation source according to Claim 1, **characterized in that** the surface structuring of the membrane layer (103) follows a structuring (102) formed on the surface of the carrier substrate (101) prior to application of the membrane layer (103).

3. The radiation source according to Claim 1 or 2, **characterized in that** the emitter layer (104) has a substantially uniform layer thickness in the membrane region with the surface structuring (102).

4. The radiation source according to one of Claims 1 to 3, **characterized in that** a passivation layer (105) is applied to the side of the emitter layer (104) facing away from the membrane layer (103), wherein the passivation layer (105) is perforated at the electrical contact regions (106) of the emitter layer (104), in order to allow electrical contacts to be made.

5. The radiation source according to one of Claims 1 to 4, **characterized in that** the holes (109) penetrate the emitter layer (104) and extend as far as the membrane layer (103).

6. The radiation source according to one of Claims 1 to 4, **characterised in that** the holes (109) made in the emitter layer (104) are configured as blind holes.

7. The radiation source according to one of Claims 1 to 6, **characterized in that** the passivation layer (105) closes the holes (109).

8. A method for producing a radiation source which is used for generating electromagnetic radiation and has a carrier substrate (101), a membrane layer (103) and an emitter layer (104), comprising the following steps:
- providing the carrier substrate (101);
- applying the membrane layer (103) to the upper side of the carrier substrate (101);
- applying the emitter layer (104) to the membrane layer (103);
- removing the carrier substrate (101) from the underside facing away from the membrane layer (103) in a membrane region, in order to expose the membrane layer (103) on the side facing away from the emitter layer (104);
- attaching electrical contact regions (106) for making electrical contact with the emitter layer (104) ;
wherein the carrier substrate (101) is structured on its upper side prior to application of the membrane layer (103), in order to produce a surface structuring (102), the average amplitude of which is equal to, or greater than, the thickness of the emitter layer (104) to be applied in the subsequent steps, the flanks formed in the surface structuring being at different angles to the main extent plane of the surface and, following the formation of the emitter layer (104), numerous holes (109) being introduced into this layer in the manner of a perforation.

9. The method according to Claim 8, **characterized in that** the membrane layer (103) is applied to the surface structure (102) of the carrier substrate (101) with a substantially constant thickness, so that the membrane layer (103) also has, on its side facing away from the carrier substrate (101), a surface structuring, the average amplitude of which is equal to, or greater than, the thickness of the emitter layer (104) to be applied in the subsequent step.

10. The method according to Claim 8 or 9, **characterized in that** the emitter layer (104) is applied to the membrane layer (103) in a substantially constant thickness, so that the emitter layer (104) also has a surface structuring on its side facing away from the membrane layer, the average amplitude of which is equal to, or greater than, the thickness of the emitter layer (104).

11. The method according to one of Claims 8 to 10, **characterized in that** after the formation of the emitter layer (104), the holes (109) are introduced into said emitter layer as blind holes.

12. The method according to one of Claims 8 to 11, **characterized in that** a passivation layer (105) is applied to the emitter layer (104), which passivation layer is permeable to the electromagnetic radiation emitted by the emitter layer (104) during heating.

13. The method according to one of Claims 8 to 12, **characterized in that** the holes (109) introduced into the emitter layer (104) are closed by the passivation layer (105).

14. The method according to one of Claims 8 to 13, **characterized in that** through-openings (107) are introduced into the passivation layer (105) and these are filled with electrically conductive material, in order to form the contact regions (106) for making electrical contact with the emitter layer (104).

15. The method according to one of Claims 8 to 14, **characterized in that** the membrane layer (103), the emitter layer (104) and, optionally, the passivation layer (105) are applied by deposition methods using semiconductor technology.

## Revendications

1. Source de rayonnement pour générer un rayonnement électromagnétique, comprenant un substrat porteur (101), une couche membranaire (103) supportée par le substrat porteur (101) et une couche émettrice (104) appliquée sur la couche membranaire (103) avec des zones de contact électrique (106), dans laquelle le substrat porteur (101) est retiré dans une zone membranaire le côté de la couche membranaire qui se détourne de la couche émettrice (104), et dans laquelle la couche émettrice (104) est chauffée lors de l'application d'un courant électrique, pour émettre le rayonnement électromagnétique, dans laquelle
- la couche membranaire (103) dans la zone de membrane présente une structuration de surface (102), dans laquelle les flancs formés dans la structuration de surface présentent des angles différents par rapport au plan principal d'extension de la surface ;
- la couche émettrice (104) suit la structuration de surface (102) ;
- la couche émettrice (104) présente de nombreux trous (109) à la manière d'une perforation ;
- l'amplitude moyenne de la structuration de surface (102) est égale ou supérieure à l'épaisseur de la couche émettrice (104).

2. Source de rayonnement selon la revendication 1, **caractérisée en ce que** la structuration de surface de la couche membranaire (103) suit une structuration (102) formée à la surface du substrat porteur (101) avant l'application de la couche membranaire (103).

3. Source de rayonnement selon la revendication 1 ou 2, **caractérisée en ce que** la couche émettrice (104) dans la zone membranaire avec la structure de surface (102) présente une épaisseur de couche essentiellement constante.

4. Source de rayonnement selon une des revendications 1 à 3, **caractérisée en ce que** sur le côté qui se détourne de la couche émettrice (104) sur la couche membranaire (103), une couche de passivation (105) est appliquée, dans laquelle la couche de passivation (105) est interrompue au niveau des zones de contact électrique (106) de la couche émettrice (104) afin de permettre le contact électrique.

5. Source de rayonnement selon une des revendications 1 à 4, **caractérisée en ce que** les trous (109) pénètrent dans la couche émettrice (104) et s'étendent jusqu'à la couche membranaire (103).

6. Source de rayonnement selon une des revendications 1 à 4, **caractérisée en ce que** les trous (109) prévus dans la couche émettrice (104) sont réalisés sous forme de trous borgnes.

7. Source de rayonnement selon une des revendications 1 à 6, **caractérisée en ce que** la couche de passivation (105) obture les trous (109).

8. Procédé de fabrication d'une source de rayonnement, qui sert à générer un rayonnement électromagnétique et comportant un substrat porteur (101), une couche membranaire (103) et une couche émettrice (104), comprenant les étapes suivantes de :
- mise à disposition du substrat porteur (101) ;
- application de la couche membranaire (103) sur le substrat porteur (101) ;
- application de la couche émettrice (104) sur la couche (103) ;
- retrait du substrat porteur (101) sur le côté inférieur qui se détourne de la couche membranaire (103) dans une zone membranaire, afin d'exposer la couche membranaire (103) sur le côté qui se détourne de la couche émettrice(104) ;
- application de zones de contact électrique (106) pour la mise en contact électrique de la couche émettrice (104) ;
dans lequel le substrat porteur (101) avant l'application de la couche membranaire (103) est structuré sur sa face supérieure afin de réaliser une structure de surface (102) dont l'amplitude moyenne est égale ou supérieure à l'épaisseur de la couche émettrice (104) à appliquer dans les étapes suivantes, dans lequel les flancs formés dans la structuration de surface présentent des angles différents par rapport au plan d'extension principal, et après la formation de la couche émettrice (104), de nombreux trous (109) sont ménagés dans cette couche à la manière d'une perforation.

9. Procédé selon la revendication 8, **caractérisé en ce que** la couche membranaire (103) est appliquée avec une épaisseur sensiblement constante sur la structuration de surface (102) du substrat porteur (101), de sorte que la couche membranaire (103) présente également sur sa face qui se détourne du substrat porteur (101) une structuration de surface, dont l'amplitude moyenne est égale ou supérieure à l'épaisseur de la couche émettrice (104) à appliquer à l'étape suivante.

10. Procédé selon la revendication 8 ou 9, **caractérisé en ce que** la couche émettrice(104) est appliqué avec une épaisseur sensiblement constante sur la couche membranaire (103), de sorte que la couche émettrice(104) présente sur le côté qui se détourne de la couche membranaire une structuration de surface, dont l'amplitude moyenne est égale ou supérieure à l'épaisseur de la couche émettrice (104).

11. Procédé selon une des revendications 8 à 10, **caractérisé en ce qu'**après la formation de la couche émettrice (104) les trous (109) sont ménagés en tant que trous borgnes dans celle-ci.

12. Procédé selon une des revendications 8 à 11, **caractérisé en ce que** sur la couche émettrice (104) une couche de passivation (105) est appliquée, qui est perméable au rayonnement électromagnétique émis par la couche de l'émetteur (104) lors du chauffage.

13. Procédé selon une des revendications 8 à 12, **caractérisé en ce que** les trous (109) ménagés dans la couche émettrice (104) sont obturés par la couche de passivation (105).

14. Procédé selon une des revendications 8 à 13, **caractérisé en ce que** des ouvertures traversantes (107) sont ménagées dans la couche de passivation (105) et celles-ci sont remplies avec un matériau électriquement conducteur, afin de former les zones de contact (106) pour la mise en contact électrique de la couche émettrice (104).

15. Procédé selon une des revendications 8 à 14, **caractérisé en ce que** la couche membranaire (103), la couche émettrice (104) et le cas échéant la couche de passivation (105) sont appliquées par un procédé de dépôt technologique à semi-conducteurs.
